(19) Europäisches Patentamt
European Patent Office
Office européen des brevets

(11) Veröffentlichungsnummer: **0 047 881**
**B1**

(12) # EUROPÄISCHE PATENTSCHRIFT

(45) Veröffentlichungstag der Patentschrift: **14.03.84**

(51) Int. Cl.³: **C 09 B 23/10,** H 01 S 3/20, C 09 K 5/00

(21) Anmeldenummer: **81106509.3**

(22) Anmeldetag: **21.08.81**

(54) **Dimethinverbindungen der Cumarinreihe, Verfahren zu deren Herstellung sowie deren Verwendung als Leuchtfarbstoffe.**

(30) Priorität: **03.09.80 DE 3033159**

(43) Veröffentlichungstag der Anmeldung: **24.03.82 Patentblatt 82/12**

(45) Bekanntmachung des Hinweises auf die Patenterteilung: **14.03.84 Patentblatt 84/11**

(84) Benannte Vertragsstaaten: **CH DE FR GB LI**

(56) Entgegenhaltungen: **FR - A - 2 264 848**

(73) Patentinhaber: **BAYER AG, Konzernverwaltung RP Patentabteilung, D-5090 Leverkusen 1 Bayerwerk (DE)**

(72) Erfinder: **Harnisch, Horst, Dr., Heinenbusch 4, D-5203 Much (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

## Dimethinverbindungen der Cumarinreihe, Verfahren zu deren Herstellung sowie deren Verwendung als Leuchtfarbstoffe

Gegenstand der Erfindung sind Dimethinfarbstoffe der allgemeinen Formel

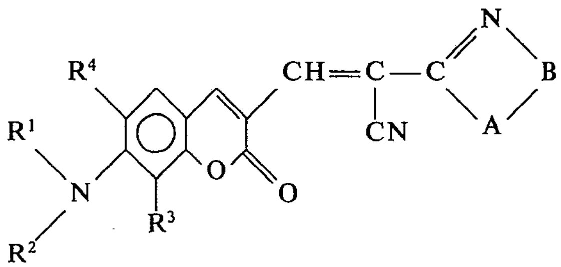

(I)

worin

A O, S, N-Alkyl, N-Aryl oder N-Aralkyl,
B die restlichen Glieder eines quasiaromatischen heterocyclischen Ringsystems,
$R^1$ Alkyl, Alkenyl, Cycloalkyl, Aralkyl oder Aryl,
$R^2$ Wasserstoff, Alkyl oder Aralkyl,
$R^3$ und $R^4$ jeweils Wasserstoff oder Methyl bedeuten, und worin
$R^1$ und $R^2$ gemeinsam einen Rest der Formel $-(CH_2)_2-Z-(CH_2)_2-$,
$R^1$ und $R^4$ gemeinsam einen Rest der Formel $-(CH_2)_2-$, $-(CH_2)_3-$ oder $-C(CH_3)_2-CH_2-CH(CH_3)-$ und
$R^2$ und $R^3$ gemeinsam einen Rest der Formel $-(CH_2)_3-$ bilden können, wobei

Z für A, $CH_2$ oder eine direkte Bindung steht,

und worin die cyclischen und acyclischen Reste in der Farbstoffchemie übliche Substituenten tragen können.

Geeignete Alkylreste $R^1$ und $R^2$ sind $C_1-C_5$-Alkylreste, die einen Substituenten wie Chlor, Brom, Cyan, $C_1-C_4$-Alkoxycarbonyl tragen können.

Unter Alkenyl sind vorzugsweise $C_3-C_4$-Alkenylreste zu verstehen.

Als Cycloalkylreste sind vor allem Cyclohexyl und Cyclopentyl zu nennen.

Als Aralkylreste $R^1$ und $R^2$ eignen sich besonders Phenyl-$C_1-C_3$-alkylreste.

Vorzugsweise steht Z für O, NH, $NCH_3$, $CH_2$ oder eine direkte Bindung.

Geeignete Arylreste sind insbesondere Phenylreste, die durch Methyl, Chlor oder $C_1-C_2$-Alkoxy 1 bis 3fach substituiert sein können.

Geeignete heterocyclische Ringsysteme, die A, B gemeinsam mit

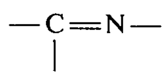

bilden können, sind Benzoxazol-, Benzimidazol-, Chinazolon-, 1,3,4-Oxdiazol- und 1,3,4-Thiadiazolringe, die wiederum durch $C_1-C_4$-Alkyl, $CF_3$, $C_1-C_4$-Alkoxy, Halogen, $C_1-C_4$-Alkoxycarbonyl, COOH, $C_1-C_4$-Alkylsulfonyl, $C_5-C_6$-Cycloalkyl, Phenyl, Phenyl-$C_1-C_3$-alkyl oder $SO_3H$ ein- bis zweifach substituiert sein können, wobei 2 benachbarte Substituenten auch gemeinsam einen Rest der Formel $-(CH_2)_2-O-$, $-(CH_2)_3-$, $-(CH_2)_4-$, $-OCH_2O-$, $-O-CH_2-CH_2-O-$ oder $-C(CH_3)_2-CH_2-CH_2-C(CH_3)_2-$ bilden können. Die heterocyclischen Systeme können darüber hinaus benzanelliert sein.

Im Rahmen der Erfindung entsprechen bevorzugte Dimethinfarbstoffe der Formel

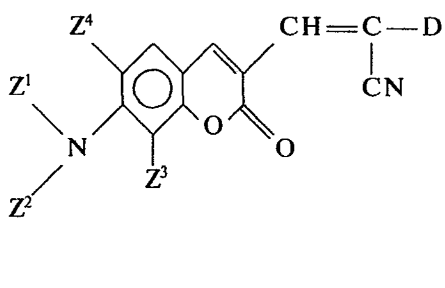

(II)

worin

$Z^1$ und $Z^2$ jeder für sich für einen durch Cl oder CN substituierten $C_1-C_4$-Alkylrest oder Phenyl-$C_1-C_3$-alkyl,

$Z^3$ und $Z^4$ einzeln für Wasserstoff,
D für einen Rest der Formeln

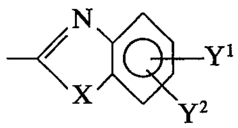 oder 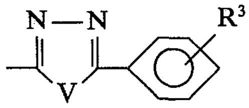

(III) (IV)

X für O, S, NH, $N-C_1-C_4$-Alkyl, N-Benzyl, N-Phenyl oder NH – CO (CO am Aromaten),
V für O oder S,
$Y^1$ für Wasserstoff, $C_1$-$C_4$-Alkyl, Chlor, $C_1-C_4$-Alkoxy, $C_1-C_4$-Alkoxycarbonyl, $C_1-C_4$-Alkylsulfonyl, Phenyl oder Cyclohexyl,
$Y^2$ für Wasserstoff, Methyl oder Chlor,
$Y^3$ für Wasserstoff, $C_1-C_4$-Alkyl, $C_1-C_2$-Alkoxy oder Chlor stehen

und worin

$Z^1$ und $Z^4$ sowie $Z^2$ und $Z^3$ auch zusammen für einen Rest der Formel $-(CH_2)_3-$ stehen können.

Von besonderem technischem Wert sind Dimethinfarbstoffe der Formel

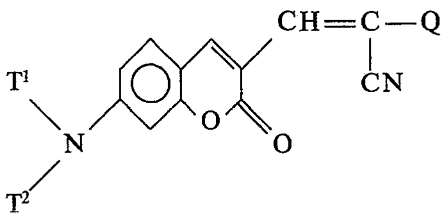

(V)

worin

$T^1$ und $T^2$ jeder für sich für $C_1-C_4$-Alkyl oder Phenyl-$C_1-C_3$-alkyl,
Q für einen Rest der Formeln

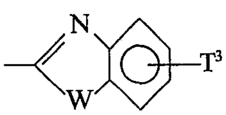 oder 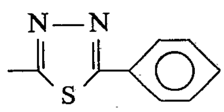

W für O, S, NH oder NH – CO (CO am Aromaten) und
$T^3$ für Wasserstoff, Methyl, Methoxy, Ethoxy oder Chlor

stehen.

Besonders bevorzugt sind Verbindungen der Formel V mit W = O.

Ein weiterer Gegenstand der Erfindung ist ein Verfahren zur Herstellung der Dimethinfarbstoffe der Formel I. Das Verfahren ist dadurch gekennzeichnet, daß man Aldehyde der Formel

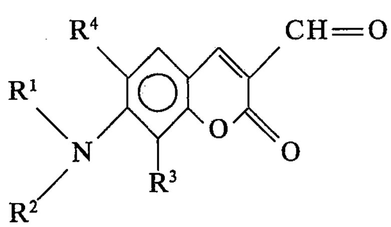

(VIII)

worin
$R^1$, $R^2$, $R^3$ und $R^4$ die oben angegebene Bedeutung besitzen,

oder funktionelle Derivate dieser Aldehyde mit Cyanmethyl-Verbindungen der Formel

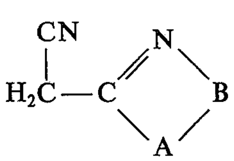

(IX).

worin

A und B die oben angegebene Bedeutung besitzen,

kondensiert.

Die Kondensation kann unter üblichen Reaktionsbedingungen, wie sie beispielsweise in US-A-4 105 665 beschrieben sind, in einem inerten organischen Lösungsmittel in Gegenwart eines basischen Katalysators durchgeführt werden.

Als basische Katalysatoren können die bei der Knoevenagelreaktion üblicherweise verwendeten Verbindungen eingesetzt werden wie beispielsweise Ammoniak, Natriumacetat, Kaliumcarbonat, Kaliumhydroxid, Kaliumcyanid, Natriummethylat, Natriummethylat, organische Stickstoffbasen wie Diethylamin, Dimethylamin, Pyridin, Morpholin. Bevorzugte Katalysatoren sind Piperidin, Pyrrolidin sowie Piperidinacetat.

Als inerte organische Lösungsmittel kommen sowohl polare als auch unpolare Lösungsmittel in Betracht, wobei man bei Anwendung mit Wasser nicht mischbarer Lösungsmittel das bei der Reaktion entstehende Wasser zweckmäßig durch azeotrope Destillation aus dem Reaktionsgemisch entfernt.

Als Lösungsmittel werden beispielsweise verwendet: Alkohole wie Methanol, Ethanol, Isopropanol, n-Propanol, n-Butanol, Cyclohexanol, Benzylalkohol, $\beta$-Phenylethylalkohol, Glykol, Glykolmonomethylether, Glykolmonoethylether, $\beta$-Dimethylaminoethanol; Amide wie Formamid, Dimethylformamid, Dimethylacetamid, N-Methylpyrrolidon; Dimethylsulfoxid; Acetonitril, Dioxan, Tetrahydrofuran; mit Wasser nicht mischbare Lösungsmittel wie Benzol, Toluol, Xylol oder Chlorbenzol.

Die Reaktionstemperaturen können in einem weiten Bereich variiert werden, beispielsweise von 15–150°C.

Die Ausgangsverbindungen der Formel VIII sowie funktionelle Derivate derselben sind bekannt (DE-A-2 413 281). Besonders geeignete funktionelle Derivate dieser Aldehyde sind die bei ihrer Darstellung durch Vilsmeier-Reaktion primär, d. h. vor der Hydrolyse zum Aldehyd anfallenden Verbindungen, insbesondere diejenigen, die durch die Teilstruktur

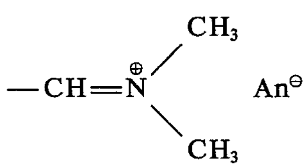

(X)

oder

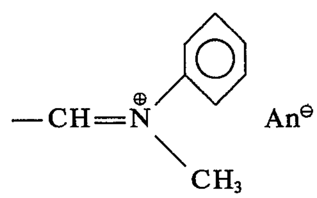

(XI)

gekennzeichnet sind, wobei $An^{\ominus}$ ein Anion wie $PO_2Cl_2^{\ominus}$ oder $Cl^{\ominus}$ bedeutet.

Die Ausgangsverbindungen der Formel IX sind ebenfalls bekannt
(DE-B-1 201 354, DE-B-1 207 937, DE-B-2 005 933,
DE-A-2 327 959, DE-A-2 632 402 und DE-A-2 710 285).

Ein zweites Verfahren zur Herstellung von Verbindungen der Formel (I) ist dadurch gekennzeichnet, daß man Salicylaldehyde der Formel

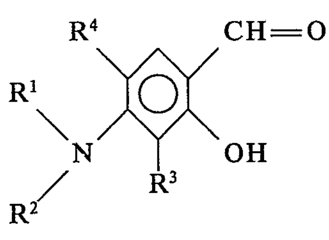

(XII)

worin $R^1$–$R^4$ die oben angegebene Bedeutung besitzen,

mit Verbindungen der Formel

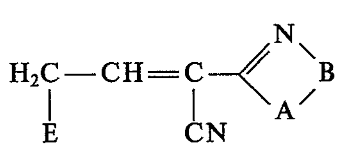

(XIII)

worin

A und B die oben angegebene Bedeutung besitzen und
E für Carbonsäureester-, Carbonsäureamid- oder Nitrilgruppe steht, unter Cumarinringschluß kondensiert.

Geeignete Carbonsäureestergruppen sind vor allem $C_1-C_4$-Alkylester.

Die Kondensation kann in einem inerten Lösungsmittel in Gegenwart eines basischen Katalysators unter gleichartigen Bedingungen, wie sie für das vorstehende Verfahren genannt sind, durchgeführt werden.

Die Ausgangsverbindungen der Formel XII sind bekannt. Die Ausgangsstoffe der Formel XIII werden beispielsweise dadurch hergestellt, daß man Verbindungen der Formel IX mit Formylessigsäurederivaten der Formel

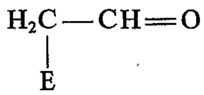
(XIV)

worin E die gleiche Bedeutung wie in Formel XIII besitzt oder mit Derivaten von XIV, in denen die Formylgruppe funktionell abgewandelt ist, kondensiert.

Auch diese Kondensation wird unter üblichen basischen Bedingungen in einem der oben genannten inerten Lösungsmittel durchgeführt.

Formylessigester, die als Alkalisalze vorliegen, können vorteilhaft in einer Mischung aus einem polaren, mit Wasser mischbaren inerten Lösungsmittel wie Ethanol, auch in Gegenwart von Wasser, kondensiert werden.

Die Dimethinfarbstoffe der Formel I eignen sich zum Färben und Bedrucken von natürlichen, halbsynthetischen und synthetischen Faser- und Gewebematerialien, beispielsweise von Polyester-, Polyamid-, Polyurethan-, Cellulose-2 1/2-acetat-, Cellulose-triacetat-, Polypropylen- und Polyacrylnitrilfasern.

Mit den erfindungsgemäßen Farbstoffen der Formel I werden auf den genannten Fasern und Geweben, insbesondere auf Polyester, sehr klare Färbungen in leuchtend roten Tönen erzeugt, die sich durch gute Gebrauchsechtheiten und durch hohe Brillanz auszeichnen.

Durch Mischung oder Kombination mit bekannten 7-Di-($C_1-C_4$-alkyl)-amino-3-heteryl-cumarinfarbstoffen, worin Heteryl für einen gegebenenfalls z. B. durch 1–2 $C_1-C_4$-Alkyl, 1–2 Chlor, $C_1-C_4$-Alkoxy, $C_1-C_4$-Alkylsulfonyl, $C_1-C_4$-Alkoxycarbonyl, Cyclohexyl oder Phenyl substituierten Benzoxazol-, Benzthiazol-, Benzimidazol-, Chinazolon- oder 5-Phenyl-1,3,4-thiadiazol-Rest steht
(DE B-1 098 125, DE-B-1 469 770, DE-B-2 005 933,
DE-B-2 030 507, DE-B-2 126 811 und DE-B-2 529 434)
oder mit 10-($C_1-C_2$-Alkoxy)-benzo[k,l]xanthen-3,4-dicarbonsäureimiden, wie sie in
DE B-1 569 761 und DE-B-1 770 818

beschrieben sind, läßt sich vorteilhaft der vom Ausschuß für Lieferbedingungen und Gütesicherung beim deutschen Normenausschuß festgelegte Warn- und Signalorangeton RAL 2005 (mit einem Leuchtdichtefaktor $\beta \geqq 0{,}45$ gemäß DIN 16 954) einstellen. Dieser hat zur Herstellung von Warnkleidung, Warn- und Signalzeichen und Sportartikeln technische Bedeutung. Bisher wurden solche Artikel mit dem Farbton RAL 2005 ausschließlich durch direktes Aufbringen einer Polyamid- oder Polyurethanbeschichtung, in welche fluoreszierende Pigmente eingebettet sind, auf Baumwollgewebe hergestellt. Die Nachteile, ungenügende Abriebfestigkeit und sehr geringe Lichtechtheit der Pigmentbeschichtung, werden durch das direkte Färben von hydrophoben Fasermaterialien mit der obengenannten Mischung oder Kombination überwunden.

Die Dimethinfarbstoffe der Formel I eignen sich auch besonders zum Einfärben von Kunststoffmassen, insbesondere von Polycarbonat. Hierin ist die hohe Hitzebeständigkeit der Verbindungen und die gute Lichtbeständigkeit der Fluoreszenz hervorzuheben.

Die fluoreszierenden Leuchtrotfarbstoffe der Formel I lassen sich — in sehr reiner Form — auch vorteilhaft als Laserfarbstoffe sowie als Energiewandler in Lichtsammelsystemen verwenden.

Besonders gut eignen sich 0,001 bis 0,01%ige, vorzugsweise 0,01%ige Einfärbungen von reinen Farbstoffen der Formel I, insbesondere Beispiel 2, in Polycarbonat, wie ®MAKROLON.

Die Lichtsammler können zusammen mit oder ohne zusätzliche elektronische Bauelemente verwendet werden.

## Beispiel 1

24,5 g 7-Diethylamino-cumarin-3-aldehyd, 15,8 g 2-Cyanmethyl-benzoxazol, 250 ml Ethanol und 2 ml Piperidin werden 4 Stunden unter Rückfluß zum Sieden erhitzt und dann abgekühlt. Der kristalline

Niederschlag wird abgesaugt, mit Ethanol gewaschen, aus 230 ml Dimethylformamid umkristallisiert, mit Ethanol gewaschen und bei 70° C im Vakuum getrocknet. Man erhält 34,2 g Verbindung der Formel

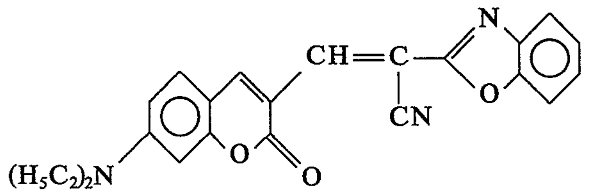

(1)

in Form eines dunkelroten Kristallpulvers vom Schmelzpunkt 268° C.
$C_{23}H_{19}N_3O_3$ (385); m/e = 385 ($M^+$).

Der Farbstoff färbt Polyesterfasern unter HT-Bedingungen (130° C) in einem leuchtend roten Farbton mit guten Echtheitseigenschaften. Für spezielle Zwecke kann der Farbstoff auch in an sich bekannter Weise nach dem Transferdruckprinzip auf Polyestertextilmaterialien aufgebracht werden.

In analoger Weise werden die in der folgenden Tabelle aufgeführten Dimethinfarbstoffe der allgemeinen Formel

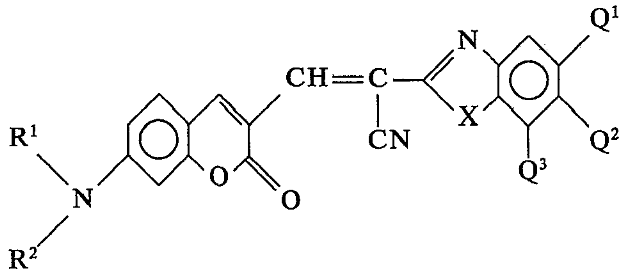

hergestellt:

| Beispiel | $R^1$ | $R^2$ | $Q^1$ | $Q^2$ | $Q^3$ | X | Farbton (Polyester) |
|---|---|---|---|---|---|---|---|
| (2) | $C_2H_5$ | $C_2H_5$ | Cl | H | H | O | rot |
| (3) | $C_2H_5$ | $C_2H_5$ | $CH_3$ | H | H | O | rot |
| (4) | $C_2H_5$ | $C_2H_5$ | Cl | H | Cl | O | rot |
| (5) | $C_2H_5$ | $C_2H_5$ | $C(CH_3)_3$ | H | H | O | rot |
| (6) | $C_2H_5$ | $C_2H_5$ | $C(CH_3)_3$ | H | $CH_3$ | O | rot |
| (7) | $C_2H_5$ | $C_2H_5$ | $CH_3$ | H | $CH_3$ | O | rot |
| (8) | $C_2H_5$ | $C_2H_5$ | $CH_3$ | $CH_3$ | H | O | rot |
| (9) | $C_2H_5$ | $C_2H_5$ | 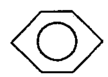 | H | H | O | rot |
| (10) | $C_2H_5$ | $C_2H_5$ | 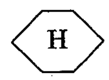 | H | H | O | rot |
| (11) | $C_2H_5$ | $C_2H_5$ | $C_2H_5—SO_2$ | H | H | O | rot |
| (12) | $C_2H_5$ | $C_2H_5$ | $CH_3OCO$ | H | H | O | rot |
| (13) | $C_2H_5$ | $C_2H_5$ | $C_2H_5OCO$ | H | H | O | rot |
| (14) | $C_2H_5$ | $C_2H_5$ | $CH_3OCH_2CH_2OCO$ | H | H | O | rot |
| (15) | $C_2H_5$ | $C_2H_5$ | $n\text{-}C_4H_9OCO$ | H | H | O | rot |
| (16) | $C_2H_5$ | $C_2H_5$ | $CH_3O$ | H | H | O | rot |
| (17) | $n\text{-}C_4H_9$ | $n\text{-}C_4H_9$ | $CF_3$ | H | H | O | rot |
| (18) | $Cl—CH_2—CH_2$ | $Cl—CH_2—CH_2$ | Cl | H | H | O | rot |
| (19) | $NC—CH_2—CH_2$ | $NC—CH_2—CH_2$ | $CH_3$ | H | H | O | rot |
| (20) | 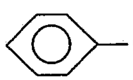—$CH_2$ | 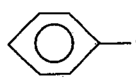—$CH_2$ | Cl | H | H | O | rot |
| (21) | 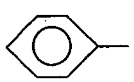—$CH_2—CH_2$ | 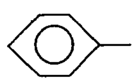—$CH_2CH_2$ | $CH_3$ | H | H | O | rot |

Fortsetzung

| Beispiel | $R^1$ | $R^2$ | $Q^1$ | $Q^2$ | $Q^3$ | X | Farbton (Polyester) |
|---|---|---|---|---|---|---|---|
| (22) | $CH_3$ | $CH_3$ | Cl | H | H | O | rot |
| (23) | $-(CH_2)_5-$ | | H | H | H | O | rot |
| (24) | $-(CH_2)_2-O-(CH_2)_2-$ | | Cl | H | H | O | rot |
| (25) | $-(CH_2)_4-$ | | 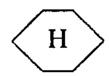 | H | H | O | rot |
| (26) | 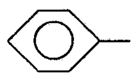 $CH_2$ | $C_2H_5$ | Cl | H | H | O | rot |
| (27) | 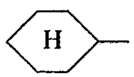 | $CH_3$ | Cl | H | H | O | rot |
| (28) | 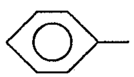 | $CH_3$ | $CH_3$ | H | H | O | rot |
| (29) | $CH_2{=}CH-CH_2$ | $CH_2{=}CH-CH_2$ | 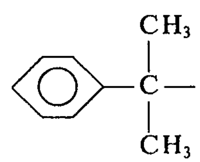 | H | H | O | rot |
| (30) | $C_2H_5$ | $C_2H_5$ | $-(CH_2)_4$ | | H | O | rot |
| (31) | 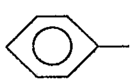 $CH_2CH_2CH_2$ | 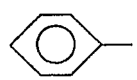 $CH_2CH_2CH_2$ | 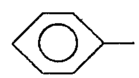 $CH_2$ | H | H | O | rot |
| (32) | n-$C_3H_6$ | n-$C_3H_6$ | $CH_3-SO_2$ | H | H | O | rot |
| (33) | $C_2H_5$ | $C_2H_5$ | n-$C_4H_9SO_2$ | H | H | O | rot |
| (34) | $C_2H_5$ | $C_2H_5$ | $CH_3$ | H | $SO_3^{\ominus}HN^{\oplus}$ 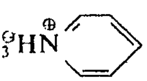 | O | rot |
| (35) | $C_2H_5$ | $C_2H_5$ | H | $OC_2H_5$ | H | S | rot |
| (36) | 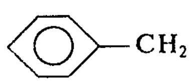 $CH_2$ | 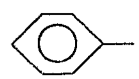 $CH_2$ | H | $OCH_3$ | H | S | rot |

Fortsetzung

| Beispiel | $R^1$ | $R^2$ | $Q^1$ | $Q^2$ | $Q^3$ | X | Farbton (Polyester) |
|---|---|---|---|---|---|---|---|
| (37) | 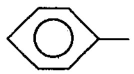 $-CH_2-CH_2$ | 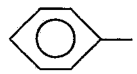 $-CH_2-CH_2$ | H | H | H | S | rot |
| (38) | $n\text{-}C_4H_9$ | $n\text{-}C_4H_9$ | H | H | H | S | rot |
| (39) | $C_2H_5$ | $C_2H_5$ | H | H | H | NH | rot |
| (40) | 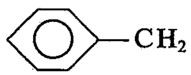 $-CH_2$ | 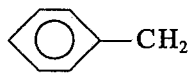 $-CH_2$ | Cl | H | H | NH | rot |
| (41) | $n\text{-}C_4H_9$ | $n\text{-}C_4H_9$ | H | H | H | $NCH_3$ | rot |
| (42) | $CH_3$ | $CH_3$ | $CH_3$ | H | H | N— 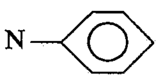 | rot |
| (43) | $C_2H_5$ | $C_2H_5$ | H | H | H | $N-CH_2-$ 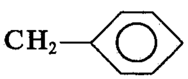 | rot |
| (44) | $n\text{-}C_4H_9$ | $n\text{-}C_4H_9$ | H | H | H | NH—CO (CO am Aromaten) | rot |
| (44a) | $C_2H_5$ | $C_2H_5$ | H | H | H | S | rot |

*) Kondensation in Pyridin statt in Ethanol.

(45) 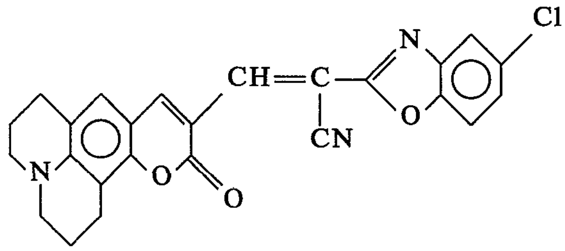 rot

(46) 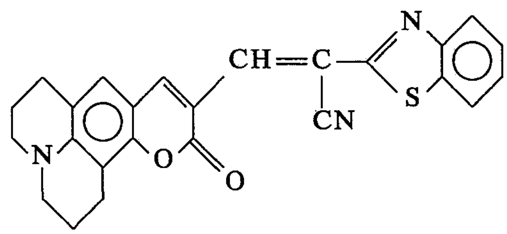 rot

(47) 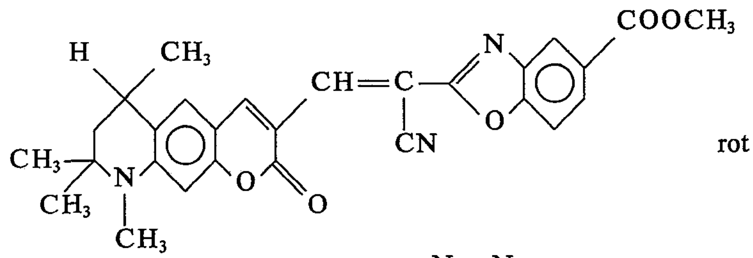 rot

(48) 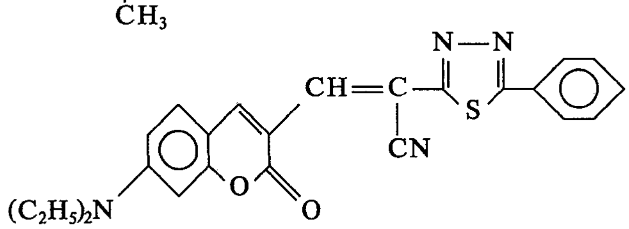 rot

(49) 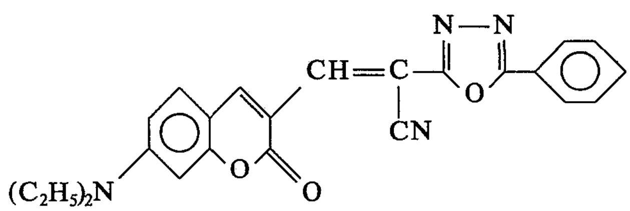 rot

**Patentansprüche**

1. Dimethinverbindungen der Formel

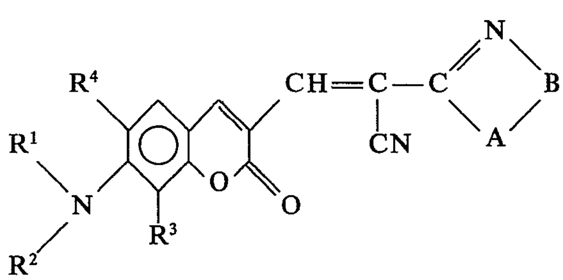

(I)

worin

A O, S, N-Alkyl, N-Aryl oder N-Aralkyl,
B die restlichen Glieder eines quasiaromatischen heterocyclischen Ringsystems,
$R^1$ Alkyl, Alkenyl, Cycloalkyl, Aralkyl oder Aryl,
$R^2$ Wasserstoff, Alkyl oder Aralkyl,
$R^3$ und $R^4$ unabhängig voneinander Wasserstoff oder Methyl bedeuten, und worin
$R^1$ und $R^2$ gemeinsam einen Rest der Formel $-(CH_2)_2-Z-(CH_2)_2-$,

$R^1$ und $R^4$ gemeinsam einen Rest der Formel $-(CH_2)_2-$, $-(CH_2)_3-$ oder $-C(CH_3)_2-CH_2-CH(CH_3)-$ und
$R^2$ und $R^3$ gemeinsam einen Rest der Formel $-(CH_2)_3-$ bilden können, wobei

Z für A, $CH_2$ oder eine direkte Bindung steht,

und worin die cyclischen und acyclischen Reste in der Farbstoffchemie übliche Substituenten tragen können und worin vorzugsweise die Alkylreste 1–5 C-Atome, die Alkenylreste 3–4 C-Atome, die Cycloalkylreste 5–6 Ringglieder aufweisen und die Arylreste Phenylreste sind.

2. Dimethinverbindungen gemäß Anspruch 1 der Formel

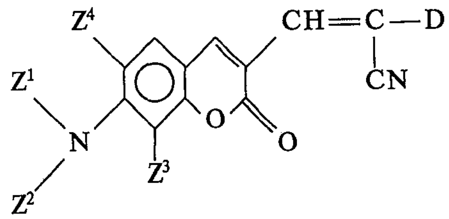

worin

$Z^1$ und $Z^2$ jeder für sich für einen durch Cl oder CN substituierten $C_1-C_4$-Alkylrest oder Phenyl-$C_1-C_3$-alkyl,
$Z^3$ und $R^4$ einzeln für Wasserstoff,
D für einen Rest der Formeln

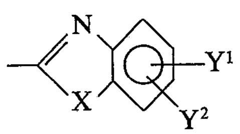 oder 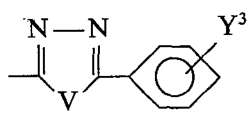

X für O, S, NH, $N-C_1-C_4$-Alkyl, N-Benzyl, N-Phenyl oder NH–CO (CO am Aromaten)
V für O oder S,
$Y^1$ für Wasserstoff, $C_1-C_4$-Alkyl, Chlor, $C_1-C_4$-Alkoxy, $C_1-C_4$-Alkoxycarbonyl, $C_1-C_4$-Alkylsulfonyl, Phenyl oder Cyclohexyl,
$Y^2$ für Wasserstoff, Methyl oder Chlor,
$Y^3$ für Wasserstoff, $C_1-C_4$-Alkyl, $C_1-C_2$-Alkoxy oder Chlor stehen,

und worin

$Z^1$ und $Z^4$ sowie $Z^2$ und $Z^3$ auch zusammen für einen Rest der Formel $-(CH_2)_3-$ stehen können.

3. Dimethinverbindungen gemäß Anspruch 1 der Formel

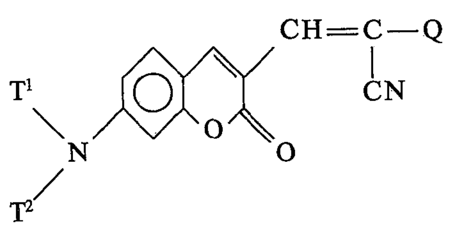

worin

$T^1$ und $T^2$ jeder für sich für $C_1-C_4$-Alkyl oder Phenyl-$C_1-C_3$-alkyl,
Q für einen Rest der Formeln

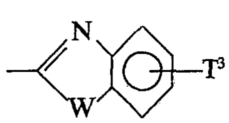 oder 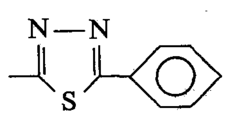

W für O, S, NH oder NH–CO (CO am Aromaten) und
$T^3$ für Wasserstoff, Methyl, Methoxy, Ethoxy oder Chlor

stehen.

4. Dimethinverbindungen gemäß Anspruch 3, dadurch gekennzeichnet, daß W = O bedeutet.

5. Verbindung der Formel

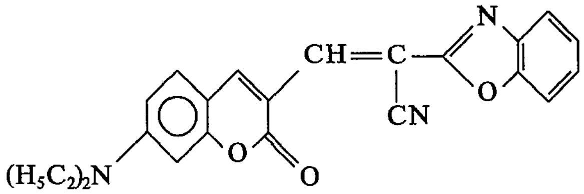

6. Verfahren zur Herstellung der Dimethinverbindungen gemäß Anspruch 1, dadurch gekennzeichnet, daß man Aldehyde der Formel

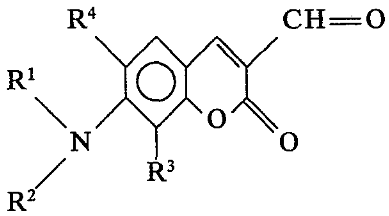

worin

$R^1$, $R^2$, $R^3$ und $R^4$ die angegebene Bedeutung besitzen,

oder funktionelle Derivate dieser Aldehyde, mit Cyanmethyl-Verbindungen der Formel

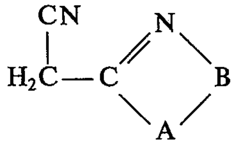

worin

A und B die angegebene Bedeutung besitzen,

kondensiert.

7. Verfahren zur Herstellung von Verbindungen der Formel (I), dadurch gekennzeichnet, daß man Salicylaldehyde der Formel

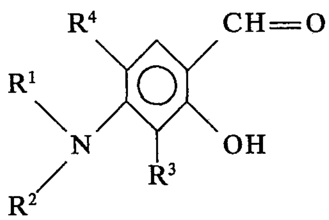

(XII)

worin $R^1$—$R^4$ die oben angegebene Bedeutung besitzen,

mit Verbindungen der Formel

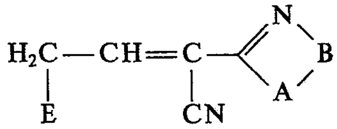

(XIII)

worin

A und B die oben angegebene Bedeutung besitzen und E für Carbonsäureester-, Carbonsäureamid- oder Nitrilgruppe steht, unter Cumarinringschluß kondensiert.

8. Verwendung der Dimethinverbindungen gemäß Anspruch 1 als Leuchtfarbstoffe.

9. Verwendung der Dimethinverbindungen gemäß Anspruch 1 als Energiewandler in Lichtsammelsystemen.

10. Mischungen oder Kombinationen von Dimethinverbindungen gemäß Anspruch 1 mit 7-D-($C_1-C_4$-alkyl)-amino-3-heteryl-cumarin-Farbstoffen, worin
Heteryl für einen gegebenenfalls durch 1−2 $C_1-C_4$-Alkyl, 1−2 Chlor, $C_1-C_4$-Alkoxy, $C_1-C_4$-Alkylsulfonyl, $C_1-C_4$-Alkoxycarbonyl, Cyclohexyl oder Phenyl substituierten Benzoxazol- Benzthiazol-, Benzimidazol-, Chinazolon- oder 5-Phenyl-1,3,4-thiadiazol-Rest steht,
oder mit 10-($C_1-C_2$-Alkoxy)-benzo[k,l]xanthen-3,4-dicarbonsäureimiden, dadurch gekennzeichnet, daß diese Mischungen oder Kombinationen auf Polyester einem Leuchtorange-Farbton gemäß der vom Ausschuß für Lieferbedingungen und Gütesicherung beim deutschen Normenausschuß festgelegten Norm RAL 2005 entsprechen.

## Claims

1. Dimethine compounds of the formula

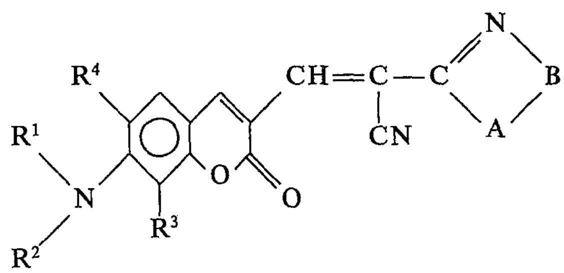

(I)

wherein

| | |
|---|---|
| A | denotes O, S, N-alkyl, N-aryl or aralkyl, |
| B | denotes the remaining members of a quasiaromatic heterocyclic ring system, |
| $R^1$ | denotes alkyl, alkenyl, cycloalkyl, aralkyl or aryl, |
| $R^2$ | denotes hydrogen, alkyl or aralkyl and |
| $R^3$ and $R^4$ | independently of one another denote hydrogen or methyl, and wherein |
| $R^1$ and $R^2$ | together can form a radical of the formula $-(CH_2)-Z-(CH_2)_2-$, |
| $R^1$ and $R^4$ | together can from a radical of the formula $-(CH_2)_2-$, $-(CH_2)_3-$ or $-C(CH_3)_2-CH_2-CH(CH_3)-$ and |
| $R^2$ and $R^3$ | together can form a radical of the formula $-(CH_2)_3-$, wherein |

Z represents A, $CH_2$ or a direct bond,

and wherein the cyclic and acyclic radicals can carry substituents which are customary in dyestuff chemistry, and wherein, preferably, the alkyl radicals contain 1−5 C atoms, the alkenyl radicals contain 3−4 C atoms, the cycloalkyl radicals contain 5−6 ring members and the aryl radicals are phenyl radicals.

2. Dimethine compounds according to Claim 1, of the formula

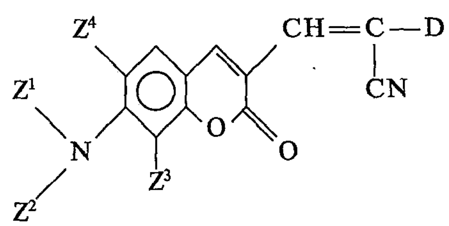

wherein

| | |
|---|---|
| $Z^1$ and $Z^2$ | each by itself represents a $C_1-C_4$-alkyl radical which is substituted by Cl or CN, or phenyl-$C_1-C_3$-alkyl, |
| $Z^3$ and $R^4$ | independently of one another represent hydrogen, |

D represents a radical of the formula

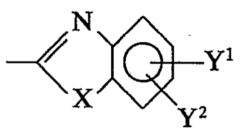

or

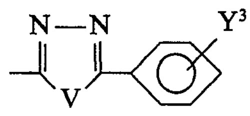

X represents O, S, NH, $N-C_1-C_4$-alkyl, N-benzyl, N-phenyl or $NH-CO$ (CO on the aromatic ring),
V represents O or S,
$Y^1$ represents hydrogen, $C_1-C_4$-alkyl, chlorine, $C_1-C_4$-alkoxy, $C_1-C_4$-alkoxycarbonyl, $C_1-C_4$-alkylsulphonyl, phenyl or cyclohexyl,
$Y^2$ represents hydrogen, methyl or chlorine and
$Y^3$ represents hydrogen, $C_1-C_4$-alkyl, $C_1-C_2$-alkoxy or chlorine,

and wherein

$Z^1$ and $Z^4$, and $Z^2$ and $Z^3$ together can also represent a radical of the formula $-(CH_2)_3-$.

3. Dimethine compounds according to Claim 1, of the formula

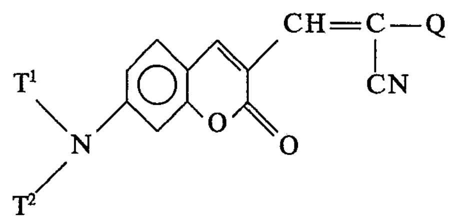

wherein

$T^1$ and $T^2$ each by itself represents $C_1-C_4$-alkyl or phenyl-$C_1-C_3$-alkyl,
Q represents a radical of the formula

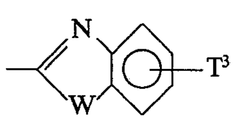

or

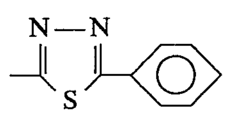

W represents O, S, NH or $NH-CO$ (CO on the aromatic ring) and
$T^3$ represents hydrogen, methyl, methoxy, ethoxy or chlorine.

4. Dimethine compounds according to Claim 3, characterised in that W = O.

5. Compound of the formula

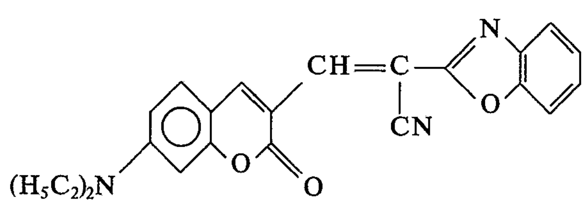

6. Process for the preparation of the dimethine compounds according to Claim 1, characterised in that aldehydes of the formula

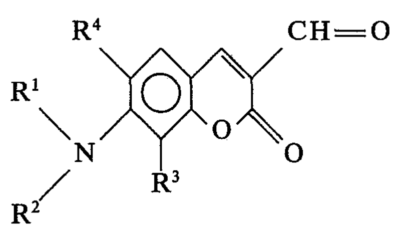

wherein

$R^1$, $R^2$, $R^3$ and $R^4$ have the meaning given,

or functional derivates of these aldehydes, are subjected to a condensation reaction with cyanomethyl compounds of the formula

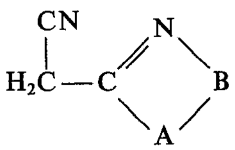

wherein

A and B have the meaning given.

7. Process fot the preparation of compounds of the formula (I), characterised in that salicylaldehydes of the formula

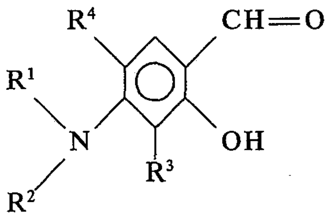

(XII)

wherein $R^1$—$R^4$ have the meaning indicated above, are subjected to a condensation reaction with compounds of the formula

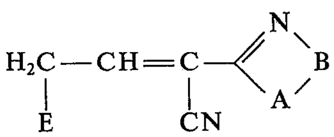

(XIII)

wherein

A and B have the meaning indicated above and E represents a carboxylic acid group, a carboxylic acid amide group or a nitrile group, with closure of the coumarin ring.

8. Use of the dimethine compounds according to Claim 1 as luminous dyestuffs.

9. Use of the dimethine compounds according to Claim 1 as energy converters in light-collecting systems.

10. Mixtures or combinations of dimethine compounds according to Claim 1 with 7-di-($C_1-C_4$-alkyl)-amino-3-heteryl-coumarin dyestuffs, in which heteryl represents a benzoxazole, benzothiazole, benzimidazole, quinazolone or 5-phenyl-1,3,4-thiadiazole radical which is optionally substituted by 1–2 $C_1-C_4$-alkyl radicals, 1–2 chlorine atoms, $C_1-C_4$-alkoxy, $C_1-C_4$-alkylsulphonyl, $C_1-C_4$-alkoxycarbonyl, cyclohexyl or phenyl, or with 10-($C_1-C_2$-alkoxy)-benzo[k,l]xanthene-3,4-dicarboxylic acid imides, characterised in that these mixtures or combinations correspond, on polyester, to a luminous orange colour shade in accordance with the Standard RAL 2005 laid down by the German Standards Sub-Committee for Terms of Delivery and Quality Assurance.

**Revendications**

1. Composés de diméthine de formule

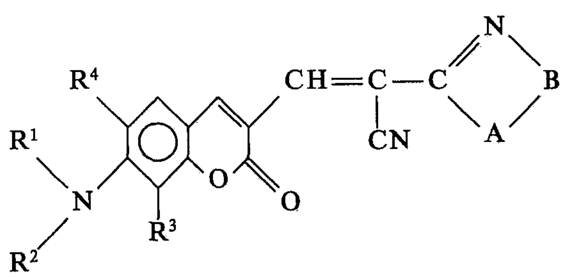

(I)

dans laquelle

- A représente O, S un groupe N-alkyle, N-aryle ou N-aralkyle,
- B représente les termes restants d'un noyau hétérocyclique quasi aromatique,
- $R^1$ est un groupe alkyle, alcényle, cycloalkyle, aralkyle ou aryle,
- $R^2$ est l'hydrogène, un groupe alkyle ou un groupe aralkyle,
- $R^3$ et $R^4$ représentent indépendamment l'un de l'autre l'hydrogène ou le groupe méthyle et
- $R^1$ et $R^2$ peuvent former ensemble un reste de formule $-(CH_2)_2-Z-(CH_2)_2-$,
- $R^1$ et $R^4$ peuvent former ensemble un reste de formule $-(CH_2)_2-$, $-(CH_2)_3-$ou$-C(CH_3)_2-CH_2-CH_2-CH(CH_3)-$et
- $R^2$ et $R^3$ peuvent former ensemble un reste de formule $-(CH_2)_3-$,

- Z représente en A, $CH_2$ ou une liaison simple,

et les restes cycliques et acycliques pouvant porter des substituants classiques dans la chimie des colorants et les restes alkyle ont de préférence 1 à 5 atomes de carbone, les restes alcényle ont de préférence 3 ou 4 atomes de carbone, les restes cycloalkyle ont de préférence 5 ou 6 chaînons et les restes aryle sont des restes phényle.

2. Composés de diméthine suivant la revendication 1, de formule

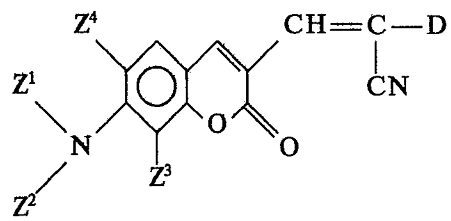

dans laquelle

- $Z^1$ et $Z^2$ représentent chacun, individuellement, un reste alkyle en $C_1$ à $C_4$ ou phényl-(alkyle en $C_1$ à $C_3$) substitué par Cl ou CN,
- $Z^3$ et $Z^4$ représentent individuellement l'hydrogène,
- D est un reste de formule

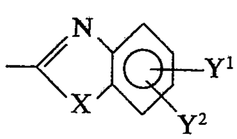

ou

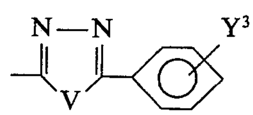

- X représente O, S, NH, N-(alkyle en $C_1$ à $C_4$), N-benyle, N-phényle ou NH—CO (CO sur le noyau aromatique)
- V représente O ou S,
- $Y^1$ représente l'hydrogène, un groupe alkyle en $C_1$ à $C_4$, le chlore, un groupe alkoxy en $C_1$ à $C_4$, (alkoxy en $C_1$ à $C_4$) carbonyle, (alkyle en $C_1$ à $C_4$) sulfonyle, phényle ou cyclohexyle,
- $Y^2$ représente l'hydrogène, le groupe méthyle ou le chlore,
- $Y^3$ représente l'hydrogène, un groupe alkyle en $C_1$ à $C_4$, un groupe alkoxy en $C_1$ ou $C_2$ ou le chlore,

et

$Z^1$ et $Z^4$ ainsi que $Z^2$ et $Z^3$ peuvent aussi former ensemble un reste de formule $-(CH_2)_3-$.

3. Composés de diméthine suivant la revendication 1, de formule

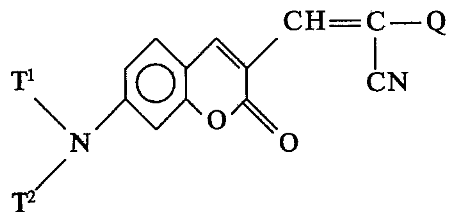

dans laquelle

$T^1$ et $T^2$ représentent chacun individuellement un groupe alkyle en $C_1$ à $C_4$ ou phényl-(alkyle en $C_1$ à $C_3$),

Q est un reste de formule

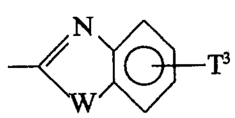

ou

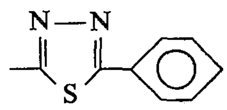

W représente O, S, NH ou un groupe NH – CO (CO sur le noyau aromatique) et
$T^3$ représente l'hydrogène, un groupe méthyle, méthoxy, éthoxy ou le chlore.

4. Composés de diméthine suivant la revendication 3, caractérisé en ce que W représente O.
5. Composé de formule

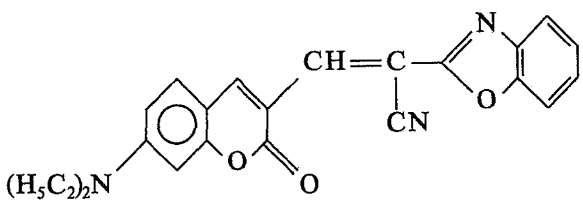

6. Procédé de production de composés de diméthine suivant la revendication 1, caractérisé en ce qu'on condense des aldéhydes de formule

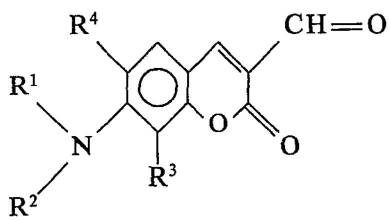

dans laquelle

$R^1$, $R^2$, $R^3$ et $R^4$ ont la définition indiquée,

ou des dérivés fonctionnels de ces aldéhydes, avec des composés cyanométhyliques de formule

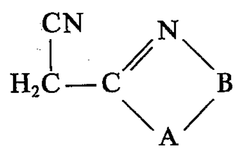

dans laquelle

A et B ont la définition indiquée.

7. Procédé de production de composés de formule (I), caractérisé en ce qu'on condense des salicylaldéhydes de formule

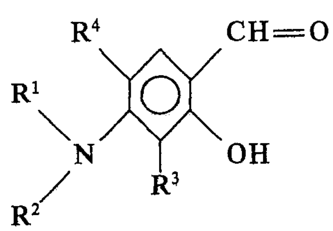

(XII)

dans laquelle $R^1$—$R^4$ ont la définition indiquée ci-dessus, avec des composés de formule

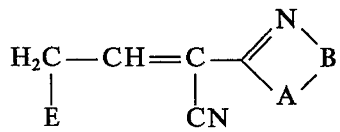
(XIII)

dans laquelle

A et B ont la définition indiquée ci-dessus et E représente un groupe ester d'acide carboxylique, amide d'acide carboxylique ou nitrile, avec cyclisation de la coumarine.

8. Ultilisation des composés de diméthine suivant la revendication 1 comme colorants fluorescents.

9. Utilisation des composés de diméthine suivant la revendication 1 comme convertisseurs d'énergie dans des systèmes collecteurs de lumière.

10. Mélanges ou associations de composés de diméthine suivant la revendication 1 avec des colorants de 7-di-(alkyle en $C_1$ à $C_4$)-amino-3-hétéryl-coumarine, dans lesquels
le terme hétéryle désigne un reste benzoxazole, benzothiazole, benzimidazole, quinazolone ou 5-phényl-1,3,4-thiadiazole éventuellement substitué par un ou deux radicaux alkyle en $C_1$ à $C_4$, un ou deux atomes de chlore, un groupe alkoxy en $C_1$ à $C_4$, alkylsulfonyle en $C_1$ à $C_4$, (alkoxy en $C_1$ à $C_4$)carbonyle, cyclohexyle ou phényle,
ou avec des amides d'acides 10-(alkoxy en $C_1$ ou $C_2$)-benzo[k, l]xanthène-3,4-dicarboxylique, caractérisés en ce que ces mélanges ou associations correspondent, sur polyester, à une teinte orangée lumineuse suivant la norme RAL 2005 établie par le comité des normes allemandes pour les conditions de livraison et la garantie de qualité.